# FASCICULE DE BREVET EUROPEEN

(11) **EP 0 606 036 B1**
(45) Date de publication et mention de la délivrance du brevet: **30.07.1997**
(21) Numéro de dépôt: 93403210.3
(22) Date de dépôt: 29.12.1993
(51) Int. Cl.: A01B 17/00

(54) **Procédé et dispositif d'inversion automatique de la position d'un timon attelé à une machine agricole de traitement des sols, et machine agricole utilisant ce procédé ou ce dispositif**
Vorrichtung und Verfahren zur automatischen Deichselumstellung eines landwirtschaftlichen Bodenbearbeitungsgerät, und solche oder solches anwendendes landwirtschaftliches Gerät
Automatic draw bar position inversing device and method of a soil working agricultural implement, and agricultural implement associated therewith

(30) Priorité: 04.01.1993 FR 9300006
(43) Date de publication de la demande: 13.07.1994
(73) Titulaire: Laigneau, André Marie Raphael, F-28300 Gasville (FR)
(72) Inventeur: Laigneau, André Marie Raphael, F-28300 Gasville (FR)
(74) Mandataire: Durand, Yves Armand Louis

(56) Documents cités:
- BE-A- 415 042
- GB-A- 2 131 263

## Description

La présente invention a essentiellement pour objet un procédé et un dispositif d'inversion automatique de la position du timon de traction d'une machine agricole de traitement des sols.

Elle vise également une machine agricole quelconque utilisant ce procédé et/ou ce dispositif.

Il existe depuis longtemps déjà des machines agricoles, telles que des rouleaux de préparation ou de travail de la terre, qui peuvent fonctionner dans les deux sens. Ces machines comportent généralement un crochet d'attelage à l'avant et à l'arrière. Ainsi, lorsqu'on se trouve en bout d'une bande de terre, on procède au décrochage de la machine à l'avant, puis on se raccroche à l'arrière pour pouvoir tirer sur la machine en sens inverse afin d'effectuer le travail sur une deuxième bande de terre adjacente à la première, et ainsi de suite (voir GB-A-2131263).

Il existe aussi des machines agricoles qui ne peuvent fonctionner que dans un seul sens, c'est-à-dire auxquelles il faut faire effectuer un demi-tour en fin de bande. C'est par exemple le cas des machines agricoles à fonctions multiples que l'on ne doit pas sortir des bandes à travailler, comme on en voit beaucoup aujourd'hui. Dans ce cas là, lorsqu'on arrive en bout d'une bande de terre, on décroche la machine qui reste en bout de bande, on fait effectuer au tracteur qui la tirait un demi-tour, et on raccroche ensuite la machine qui, entraînée à nouveau par le tracteur, va tourner et passer sur la deuxième bande de terre.

Mais le réaccrochage de la machine nécessitait des manoeuvres compliquées du tracteur et également au niveau du point d'accrochage du tracteur sur la machine.

Aussi, la présente invention a pour but de remédier à ces inconvénients qui font perdre du temps et sont coûteux, en proposant un procédé et un dispositif qui permettent, après décrochage du tracteur, une orientation automatique et correcte du timon de la machine en fin de chaque bande de terre à traiter, de sorte que, après décrochage et virage du tracteur, celui-ci pourra s'accrocher à nouveau automatiquement à la machine sans manoeuvres compliquées et sans intervention particulière sur le timon attelé à la machine.

A cet effet, l'invention a pour objet un dispositif d'inversion automatique conforme à la revendication 1.

Suivant une autre caractéristique de ce dispositif, les moyens précités sont constitués par une fourche articulée sur le bâti de la machine, le timon étant articulé sur l'une des extrémités de la fourche et les branches de la fourche étant susceptibles de coopérer l'une et l'autre avec une butée ou analogue solidaire d'une barre montée coulissante sur ledit bâti.

On précisera encore ici qu'au moins un ressort relie le timon à la butée précitée.

Quant à la barre précitée, elle comporte deux encoches coopérant l'une ou l'autre avec un élément de verrouillage temporaire de cette barre.

Suivant un autre mode de réalisation, les moyens précités sont constitués par un secteur monté transversalement sur le timon et sur lequel peut rouler un galet ou analogue sollicité par un ressort relié au bâti de la machine.

Le secteur précité comporte à chacune de ses extrémités une encoche susceptible de retenir positivement le galet, tandis que le bâti de la machine comporte deux butées ou analogues coopérant l'une ou l'autre avec le galet suivant l'orientation du timon.

Suivant encore un autre mode de réalisation, les moyens précités sont constitués par une biellette articulée avec le timon sur le bâti de la machine et sollicitée d'une part par un premier ressort relié au bâti et d'autre part par un deuxième ressort relié au timon.

Suivant encore une autre caractéristique, l'une des extrémités de la biellette comporte deux rampes aptes à coopérer, lors de la traction et du pivotement du timon, avec une butée ou analogue solidaire du bâti.

Cette invention vise encore un procédé d'inversion automatique de la position d'un timon de traction d'une machine agricole pour traiter les sols suivant des bandes de terre adjacentes, et du type consistant à décrocher la machine en bout d'une première bande pour qu'après virage de l'engin qui la tire, celui-ci puisse à nouveau s'accrocher sur le timon de la machine pour la tirer sur une deuxième bande de terre adjacente, caractérisé en ce que :
- on tire avec l'engin, après son virage, le timon se trouvant dans une position transversale à la machine en bout de la première bande de terre,
- on actionne lors de cette traction qui permet la rotation de la machine vers la deuxième bande de terre, des moyens prenant automatiquement une position différente de celle qu'ils avaient alors que la machine était sur la première bande de terre, et
- après décrochage de l'engin en bout de la deuxième bande de terre, les moyens précités permettent au timon, sans intervention aucune, de prendre automatiquement une position transversale opposée à la précédente, de sorte que ledit timon se trouve dans la position adéquate pour être repris et tiré par l'engin, après son virage, sur une troisième bande de terre adjacente à la seconde, et ainsi de suite.

L'invention vise également une machine agricole quelconque à une ou plusieurs fonctions et pouvant comporter un bâti unique ou plusieurs bâtis articulés, caractérisée en ce qu'elle utilise le dispositif et/ou le procédé répondant aux caractéristiques ci-dessus.

Mais d'autres avantages et caractéristiques de l'invention apparaîtront mieux dans la description détaillée qui suit et se réfère aux dessins annexés, donnés uniquement à titre d'exemple, et dans lesquels :
La figure 1 illustre très schématiquement et en plan le travail de plusieurs bandes de terre adjacentes à l'aide d'une machine agricole équipée du dispositif selon l'invention ;
La figure 2 est une vue schématique et en plan de dessus illustrant, suivant un premier mode de réalisation, le dispositif de l'invention équipant un rouleau de travail du sol représenté en position de traction et de travail ;
Les figures 3 à 8 sont des vues similaires, mais montrant les différentes positions prises successivement par le dispositif après décrochage (figure 3) et lors de la traction effectuée sur le timon pour faire tourner le rouleau et le faire passer d'une bande de terre à l'autre (figures 4 à 8) ;
La figure 9 est une vue schématique et en perspective du dispositif représenté sur les figures 2 à 8 ;
La figure 10 est une vue schématique et en plan de dessus d'un deuxième mode de réalisation du dispositif conforme à cette invention ;
Les figures 11 et 12 sont des vues similaires à la figure 10, mais montrant le dispositif de cette figure pour deux positions particulières du timon;
La figure 13 est une vue schématique et de côté d'une machine agricole à plusieurs fonctions et équipée d'encore un autre mode de réalisation de dispositif selon cette invention ;
La figure 14 est une vue en plan et de dessus de la machine visible sur la figure 13, et cela suivant la flèche XIV de cette figure ;
La figure 15 est une vue en plan et de dessus, à plus petite échelle, de la machine montrée sur la figure 13, ladite machine étant représentée en phase de début de rotation.

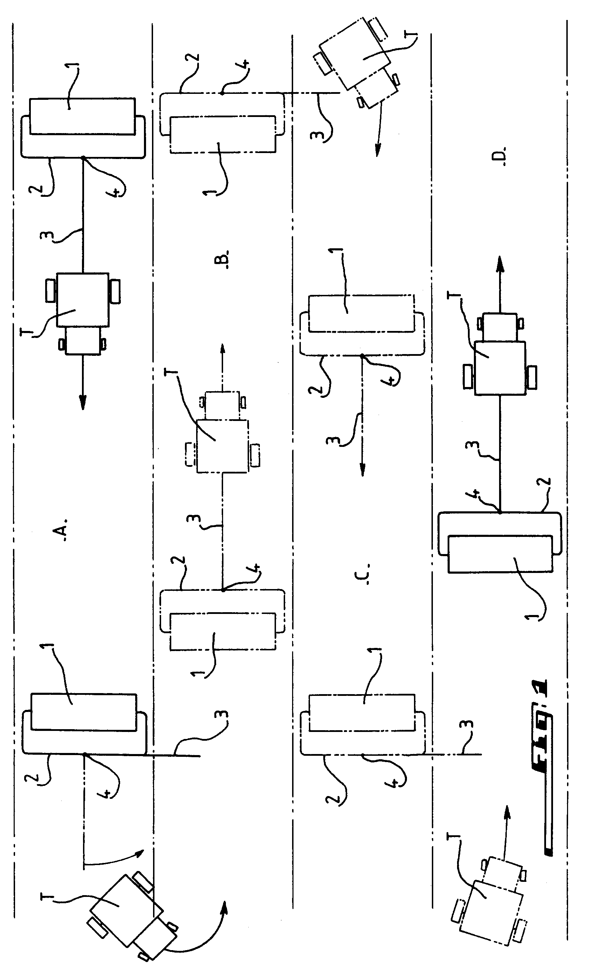

On voit sur la figure 1 une machine agricole constituée tout simplement ici par un rouleau 1 de travail du sol monté sur un bâti 2 auquel est attelé un timon 3 articulé en 4 sur le bâti 2 et pouvant être accroché à un engin tel que par exemple un tracteur T.

Le rouleau 1, tiré par le tracteur T, peut travailler plusieurs bandes de terre adjacentes repérées A, B, C et D, et cela de la manière suivante.

Le rouleau 1 travaille la première bande de terre A, et, arrivé en bout de cette bande, le tracteur T est décroché.

Comme cela est matérialisé par des flèches, le tracteur T effectue un demi-tour, tandis que, grâce au dispositif de l'invention qui sera décrit ultérieurement, le timon 3 est, dès le décrochage, rappelé automatiquement dans une position transversale à la direction du rouleau ou à la bande de terre A.

Le tracteur T ayant effectué son demi-tour va donc se réaccrocher au timon 3 pour faire tourner le rouleau 1 et l'amener sur la bande de terre B qu'il va travailler.

Puis, arrivé en bout de cette bande B, le tracteur T sera à nouveau décroché, ce qui, grâce au dispositif de l'invention, va provoquer le rappel du timon 3 suivant une direction transversale à la bande de terre B, mais qui est opposée à la position transversale qu'avait ce timon en bout de la bande A.

Le tracteur T ayant effectué son demi-tour va donc pouvoir se réaccrocher au timon 3 et faire tourner le rouleau 1 pour qu'il puisse travailler la bande de terre C, en fin de laquelle, après décrochage, le timon 3 prendra automatiquement une position transversale opposée à celle en bout de la bande B, et ainsi de suite.

On comprend donc déjà qu'en fin de bande de terre travaillée, et sans intervention sur le timon 3, celui-ci prendra automatiquement grâce au dispositif de l'invention qui sera décrit ci-après, une position transversale et inversée d'une bande de terre à l'autre pour permettre un réaccrochage du tracteur qui pourra par conséquent effectuer rapidement et sans manoeuvres compliquées en bout de bande, avec la machine qu'il entraîne, le travail de bandes de terre adjacentes et successives.

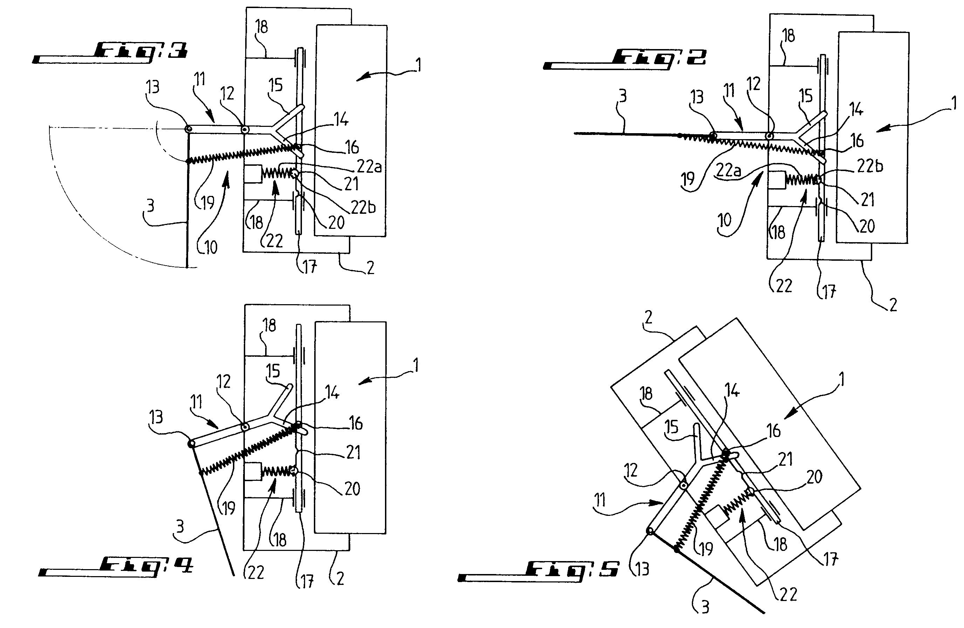

Suivant le mode de réalisation illustré par les figures 2 à 9, le dispositif conforme à cette invention comprend des moyens 10 actionnables par une traction effectuée par le timon 3 et agencés entre ce timon et le bâti 2 de la machine ou rouleau 1.

Les moyens 10 sont essentiellement constitués par une pièce 11 en forme de fourche articulée en 12 sur le bâti 2. Le timon 3 est articulé en 13 sur l'une des extrémités de la pièce 11, tandis que, comme on le voit mieux sur la figure 9, les branches 14, 15 formant fourche de la pièce 11 sont susceptibles de coopérer avec une butée ou analogue 16 solidaire d'une barre 17 montée coulissante sur le bâti 2. On a montré schématiquement en 18 sur les figures 2 à 8 des paliers solidaires du bâti 2 et dans lesquels est montée à coulissement la barre 17 suivant une direction parallèle à l'axe du rouleau 1.

Entre le timon 3 et la butée 16 est prévu au moins un ressort de rappel 19.

La barre 17 susceptible de coulisser dans les paliers 18 comporte deux encoches 20, 21 pouvant l'une ou l'autre coopérer avec un élément 22 de verrouillage temporaire de ladite barre. Cet élément 22 pourra revêtir, sans sortir du cadre de l'invention, une forme appropriée quelconque, et être par exemple constitué, comme cela est représenté sur les figures 2 à 9, par un ressort 22a sollicitant une bille ou analogue 22b dans l'encoche 20 ou 21.

Comme cela apparaît clairement sur la figure 9, le bâti 2 est muni de butées ou analogues 23, de part et d'autre de l'articulation 12 de la pièce en forme de fourche 11, ces butées 23 étant susceptibles de coopérer avec le timon 3 suivant son orientation. Mais, pour une meilleure compréhension de l'invention, on expliquera ci-après le fonctionnement du dispositif qui vient d'être décrit en se reportant successivement aux figures 2 à 8.

Lorsque le tracteur T tire le rouleau 1 sur une bande de terre, telle que la bande A visible sur la figure 1, les moyens 10 selon l'invention se trouvent dans la position représentée sur la figure 2.

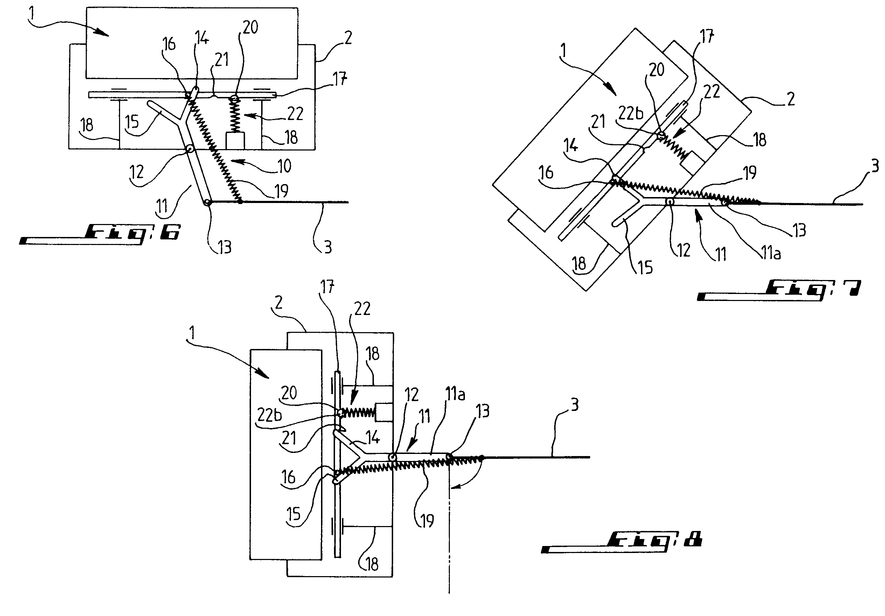

En bout de la bande A, et après décrochage du tracteur T, le timon 3, sous l'effet du ressort de rappel 19, prend la position transversale visible sur la figure 3.

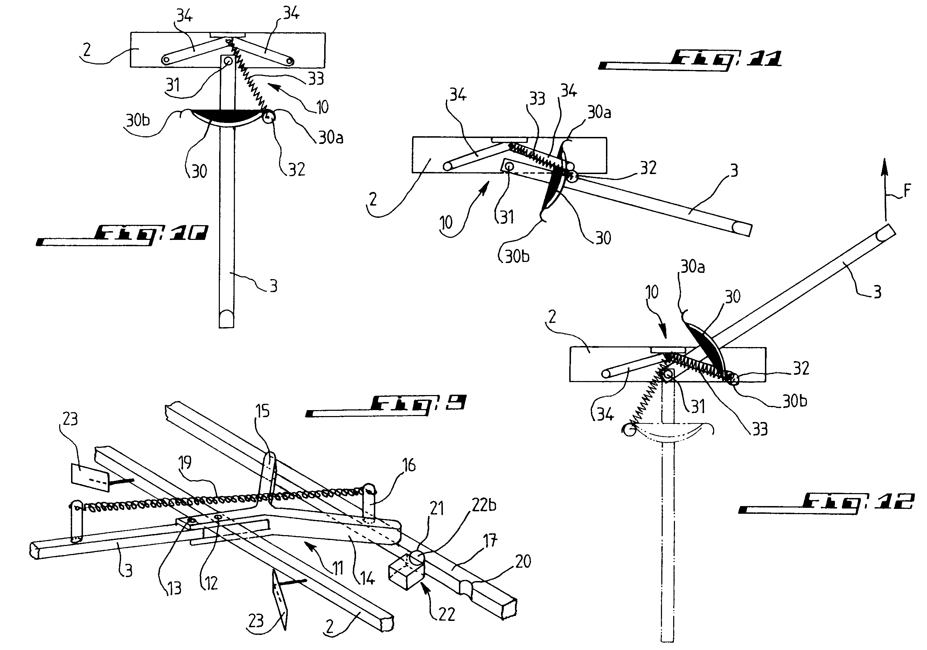

Après avoir effectué un demi-tour, le tracteur T parvient sur la bande de terre adjacente B (figure 1), et s'accroche sur le timon 3 pour effectuer une traction sur celui-ci, comme on le voit bien sur la figure 4. Cette traction sur le timon 3 provoque le pivotement de la pièce 11 en forme de fourche dont la branche 14 pousse la butée 16 et donc la barre 17, l'élément de verrouillage 22 venant alors se placer dans l'encoche 20.

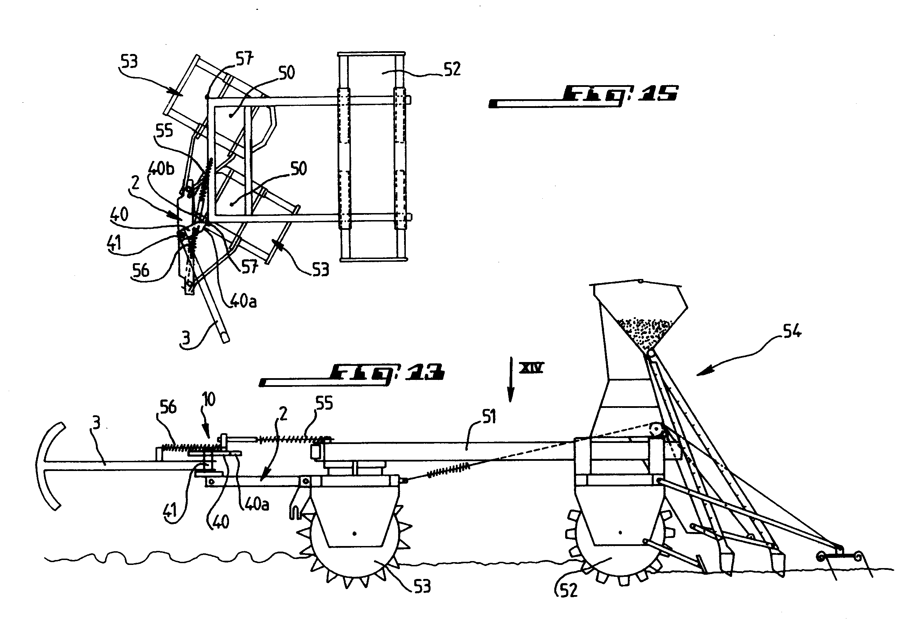

Le timon 23 prend alors appui sur une butée 23 solidaire du bâti 2 (figure 9), et le tracteur T tirant sur le timon 3 commencera à faire tourner le rouleau 1, comme on le voit sur la figure 5.

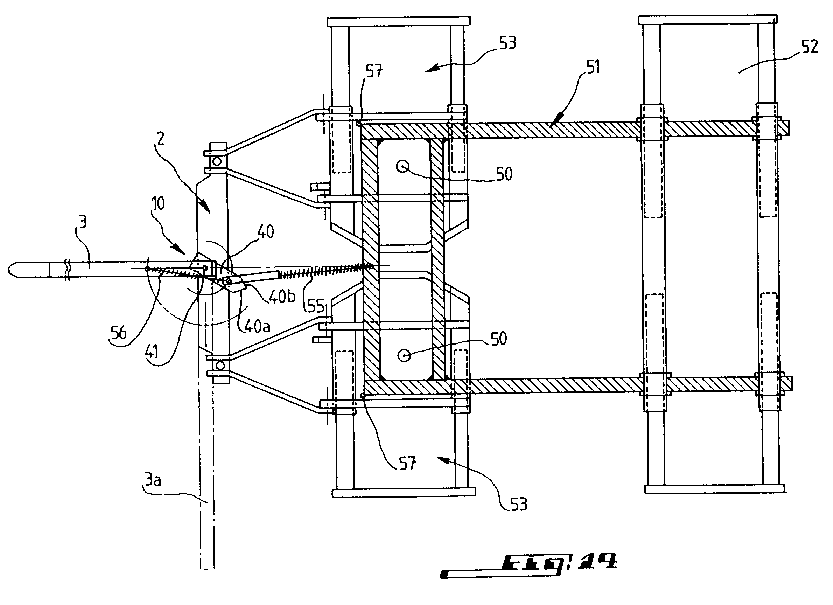

La rotation du rouleau 1 continuera sous l'effet de la traction par le tracteur T, et il prendra successivement les positions visibles sur les figures 6 et 7, et cela jusqu'à ce que le timon 3 se trouve dans l'axe du tracteur T et donc prêt à entraîner le rouleau 1 sur une bande de terre adjacente telle que B. Il est important d'observer ici que, conformément à l'invention, le passage de la position visible sur la figure 7 à celle visible sur la figure 8 permettra au ressort 19 de franchir une ligne de point mort matérialisée par le bras 11a de la pièce en forme de fourche 11, étant entendu qu'après ce franchissement, la butée 16 solidaire de la barre 17 viendra en appui contre la branche 15 de la pièce 11, comme on le voit bien sur la figure 8.

Une fois le rouleau 1 arrivé en bout de la bande de terre B (figure 1), le décrochage du tracteur T, provoquera, sous l'effet du ressort 19, la rotation du timon 3 qui prendra une position transversale visible en traits fantômes sur la figure 8 et qui est inverse de celle représentée sur la figure 3, de sorte que le tracteur T, après son demi-tour, pourra réaccrocher le timon 3 et ainsi faire tourner et entraîner le rouleau 1 sur la bande de terre adjacente suivante C. Lors de la rotation du rouleau 1 entraîné par le tracteur T, la pièce 11, la barre 17 et le ressort 19 effectueront les mouvements décrits précédemment, mais suivant une séquence inverse. En particulier, lorsque le rouleau 1 se trouvera sur la bande de terre C dans l'axe du tracteur, le ressort 19 sera passé de l'autre côté du bras lla de la pièce 11, c'est-à-dire du côté opposé à celui représenté sur la figure 8, la butée 16 prenant alors appui sur la branche 14 de ladite pièce 11 en forme de fourche.

Dans le mode de réalisation représenté sur les figures 10, 11 et 12, les moyens 10 selon l'invention sont constitués par une pièce 30 en forme de secteur montée transversalement sur le timon 3 articulé sur le bâti 2 de la machine (non représentée) en 31.

Sur la pièce en forme de secteur 30 peut rouler un galet ou analogue 32 sollicité par un ressort 33 fonctionnant en traction et reliant le ou les galets 32 au bâti 2.

A chacune de ses extrémités, la pièce en forme de secteur 30 comporte une encoche ou analogue 30a, 30b formant réceptacle et assurant la retenue positive du galet 32.

Le bâti 2 de la machine comporte deux butées ou analogues 34 pouvant coopérer l'une ou l'autre avec le galet 32 lors de la rotation du timon 3 autour de son articulation 31 sur le bâti 2.

Le fonctionnement du dispositif qui vient d'être décrit est le suivant.

En position normale de traction sur une bande de terre, c'est-à-dire pour une position du timon 3 dans l'axe du tracteur T, les moyens 10 se trouvent dans la position représentée sur la figure 10, le galet 32 étant retenu dans l'encoche 30a de la pièce 30 en forme de secteur.

En fin de bande, le timon 3 est décroché et il prendra automatiquement la position transversale visible sur la figure 11, sous l'effet du ressort 33. Dans cette position, le galet 32 prendra appui sur l'une des butées 34, de sorte que le timon 3 sera retenu en position transversale.

Le tracteur T décroché du timon 3 effectue alors son demi-tour pour venir se réaccrocher sur l'extrémité du timon 3 dans la position visible sur la figure 11. La traction effectuée par le tracteur T sur le timon 3 suivant la flèche F visible sur la figure 12 provoquera alors la mise en place du galet 32 dans l'autre encoche 30b de la pièce 30 en forme de secteur, comme on le voit sur la figure. Ainsi, en continuant sa traction, le tracteur T provoquera la rotation du bâti 2 pour faire passer la machine sur la bande de terre adjacente, étant entendu que, lors de la rotation du bâti, le timon 3 viendra en butée sur un élément de réaction (non représenté) solidaire du bâti 2, et revêtant par exemple la forme d'une butée telle que 23, comme représenté sur la figure 9 pour le mode de réalisation décrit précédemment.

Mais il est surtout important de remarquer ici que le passage du galet 32 de l'encoche 30a à encoche 30b, provoquera le passage du ressort 33 de l'autre côté de la ligne de point mort constituée par le timon 3, et cela lorsque le bâti 2 de la machine se retrouvera dans l'axe du tracteur T, comme représenté en traits pointillés sur la figure 12. Dès lors, lorsqu'on se retrouvera en fin de bande, et que le timon 3 sera décroché, ce dernier prendra une position transversale inverse de celle représentée sur la figure 11, ce qui, comme on le comprend en se référant une fois de plus à la figure 1, permettra le réaccrochage du timon 3 par le tracteur T sur la bande de terre adjacente suivante.

Dans le mode de réalisation illustré par les figures 13 à 15, les moyens 10 sont essentiellement constitués par une biellette 40 articulée en 41 avec le timon 3 sur le bâti 2 de la machine, qui est ici un bâti secondaire articulé en 50 sur un bâti principal 51 muni à l'arrière d'un rouleau 52 de travail de la terre. Le bâti secondaire 2 comporte lui-même deux rouleaux préparateurs 53. En aval du rouleau arrière 52 peut être prévu, comme on le voit bien sur la figure 13, un semoir repéré d'une manière générale en 54.

Revenant à la biellette 40 articulée avec le timon 3 sur le bâti 2, on voit bien sur les figures 13 à 15 qu'elle est sollicitée d'un côté par un premier ressort 55 la reliant au bâti principal 51, et d'un autre côté par un deuxième ressort 56 reliant ladite biellette au timon 3.

A l'une de ses extrémités, la biellette 40 comporte deux rampes ou analogues 40a, 40b formant un V et dont le rôle sera expliqué en détail plus loin. On dira cependant ici que, sous l'effet de la traction sur le timon 3 pour faire tourner la machine et donc sous l'effet de la rotation tout d'abord du bâti secondaire 2 par rapport au bâti principal 51, les rampes 40a, 40b de la biellette 40 pourront coopérer avec une butée ou analogue 57 solidaire du bâti principal 51, et de chaque côté de ce bâti, comme on le voit bien sur la figure 14.

Mais, pour une meilleure compréhension du mode de réalisation des figures 13 à 15, on en décrira ci-après brièvement le fonctionnement.

En position de travail sur une bande de terre, c'est-à-dire lorsque l'axe longitudinal de la machine se trouve dans l'axe du tracteur, les moyens 10 agencés entre le bâti et le timon 3 se trouvent dans la position représentée sur les figures 13 et 14.

En bout d'une bande de terre, telle que la bande A visible sur la figure 1, le tracteur est décroché et le timon 3, sous l'effet du ressort 56, prend automatiquement la position transversale 3a visible en traits fantômes sur la figure 14.

Le tracteur effectue son demi-tour et vient, sur la bande de terre adjacente B se réaccrocher sur le timon 3 pour ainsi faire tourner et tirer la machine.

Plus précisément, comme on le voit sur la figure 15, la traction effectuée sur le timon 3 va tout d'abord provoquer la rotation du bâti 2 et donc de ses rouleaux associés 53 autour des points d'articulation 50, et cela jusqu'à ce que la biellette 40, par sa rampe 40a, vienne coopérer avec l'une des butées 57. Ainsi, en continuant la rotation sous l'effet de la traction sur le timon 3, la biellette 40 pivote autour de son axe d'articulation 41, et en fin de rotation du bâti 2 et également du bâti principal 51, c'est-à-dire lorsque la machine se retrouvera dans l'axe du tracteur sur la bande de terre adjacente B, le ressort 55 aura franchi la ligne de point mort matérialisée par le timon 3, de sorte que la biellette 40, ou plutôt l'extrémité de cette biellette avec rampes 40a, 40b se trouvera de l'autre côté du timon 3, c'est-à-dire du côté opposé à celui représenté sur la figure 14.

Dès lors, lorsqu'on se retrouvera en fin de bande B, et après décrochage du tracteur, le timon 3, sera sollicité par le ressort 56 dans une position transversale inverse de celle représentée en traits fantômes sur la figure 14. On fera effectuer au tracteur un demi-tour pour qu'il vienne se réaccrocher sur le timon 3 et le fonctionnement qui vient d'être décrit se reproduira, sauf qu'ici, lors de la rotation du bâti 2, pour passer de la bande de terre B à la bande de terre C (figure 1), c'est la rampe 40b de la biellette 40 qui coopérera avec l'autre butée 57 du bâti 51, pour faire repasser la biellette 40 de l'autre côté du timon 3, comme représenté sur la figure 14, de sorte qu'en fin de la bande de terre C (figure 1), le timon 3 prendra automatiquement, après décrochage du tracteur, la position visible en traits fantômes sur la figure 14.

On a donc réalisé suivant l'invention une machine agricole pouvant être d'un type quelconque, à une ou plusieurs fonctions, comportant des moyens simples et actionnables par une traction effectuée sur le timon de la machine pour le faire passer automatiquement, lors de son décrochage, d'une position transversale qu'il avait en bout d'une première bande de terre à une position transversale inverse en bout d'une deuxième bande de terre adjacente, et cela de façon à permettre sa reprise par le tracteur en bout des bandes de terre adjacentes successives sans aucune intervention spéciale sur ledit timon, de sorte que la rapidité et le coût du travail s'en trouvent considérablement améliorés.

## Revendications

1. Dispositif d'inversion automatique de la position d'un timon attelé à une machine agricole de traitement des sols,
caractérisé en ce qu'entre la machine et le timon (3) sont prévus des moyens (10) rappelant le timon (3), lors de son décrochage en bout d'une bande de terre (B), automatiquement à une position transversale inverse à la position transversale à laquelle le timon était rappelé par lesdits moyens (10) lors du décrochage en bout de la bande de terre précédente et adjacente (A),
lesdits moyens (10) étant actionnables, par la traction effectuée sur le timon (3) lors de la reprise du timon par l'engin de traction (T) sur la bande suivante et adjacente (C), pour prendre une position différente de celle qu'ils avaient alors que la machine était sur la bande adjacente (B),
afin de pouvoir rappeler, par leur position différente, le timon (3) vers sa position inverse,
de façon à permettre la reprise du timon par l'engin (T) de traction de la machine en bout des bandes de terre adjacentes successives sans intervention sur le timon (3).

2. Dispositif selon la revendication 1, caractérisé en ce que les moyens précités (10) sont constitués par une fourche (11) articulée (12) sur le bâti (2) de la machine, le timon (3) étant articulé (13) sur l'une des extrémités de la fourche et les branches (14, 15) de la fourche étant susceptibles de coopérer l'une et l'autre avec une butée ou analogue (16) solidaire d'une barre (17) montée coulissante sur ledit bâti.

3. Dispositif selon la revendication 1 ou 2, caractérisé par au moins un ressort (19) reliant le timon (3) à la butée précitée (16).

4. Dispositif selon l'une des revendications 1 à 3, caractérisé en ce que la barre précitée (17) comporte deux encoches (20, 21) coopérant l'une ou l'autre avec un élément (22) de verrouillage temporaire de cette barre.

5. Dispositif selon la revendication 1, caractérisé en ce que les moyens précités (10) sont constitués par un secteur (30) monté transversalement sur le timon (3) et sur lequel peut rouler un galet ou analogue (32) sollicité par un ressort (33) relié au bâti (2) de la machine.

6. Dispositif selon la revendication 5, caractérisé en ce que le secteur précité (30) comporte à chacune de ses extrémités une encoche (30a, 30b) susceptible de retenir positivement le galet (32), tandis que le bâti (2) de la machine comporte deux butées ou analogues (34) coopérant l'une ou l'autre avec le galet (32) suivant l'orientation du timon (3).

7. Dispositif selon la revendication 1, caractérisé en ce que les moyens précités (10) sont constitués par une biellette (40) articulée (41) avec le timon (3) sur le bâti (2, 51) de la machine et sollicitée d'une part par un premier ressort (55) relié au bâti (51) et d'autre part par un deuxième ressort (56) relié au timon (3).

8. Dispositif selon la revendication 7, caractérisé en ce que l'une des extrémités de la biellette (40) comporte deux rampes (40a, 40b) aptes à coopérer, lors de la traction et du pivotement du timon (3), avec une butée ou analogue (57) solidaire du bâti (51).

9. Procédé d'inversion automatique de la position d'un timon (3) de traction d'une machine agricole pour traiter les sols suivant des bandes de terre adjacentes (A, B, C) et du type consistant à décrocher la machine en bout d'une première bande (A) pour qu'après virage de l'engin qui la tire, celui-ci puisse à nouveau s'accrocher sur le timon (3) de la machine pour la tirer sur une deuxième bande de terre adjacente (B), caractérisé en ce que :
- on tire avec l'engin (T), après son virage, le timon (3) se trouvant dans une position transversale à la machine en bout de la première bande de terre (A) ,
- on actionne lors de cette traction qui permet la rotation de la machine vers la deuxième bande de terre (B), des moyens (10) prenant automatiquement une position différente de celle qu'ils avaient alors que la machine était sur la première bande de terre (A), et
- après décrochage de l'engin en bout de la deuxième bande de terre (B), les moyens précités (10) permettent au timon (3) sans intervention aucune, de prendre automatiquement une position transversale opposée à la précédente, de sorte que ledit timon se trouve dans la position adéquate pour être repris et tiré par l'engin (T), après son virage, sur une troisième bande de terre (C) adjacente à la seconde (B), et ainsi de suite.

10. Machine agricole à une ou plusieurs fonctions et comportant un bâti (2) ou plusieurs bâtis articulés (2, 51), caractérisée en ce qu'elle utilise le dispositif et/ou le procédé selon l'une quelconque des revendications précédentes.

## Claims

1. Device for the automatic reversal of the position of a pole coupled to an agricultural machine for the treatment of the soils, characterized in that between the machine and the pole (3) are provided means (10) drawing the pole (3), upon its being uncoupled at the end of a stretch of ground (B) automatically back to a transverse position reverse of the transverse position in which the pole was drawn back by the said means (10) upon its being uncoupled at the end of the foregoing and adjacent stretch of ground (A), the said means (10) being actuatable by the pull effected on the pole (3) upon the pole being taken up again by the traction vehicle (T) on the following and adjacent stretch (C) to assume a position different from that they had when the machine was on the adjacent stretch (B), in order that owing to their different position, they may return the pole (3) towards its reverse position, so as to permit the pole to be taken up again by the vehicle (T) for the traction of the machine at the end of the successive adjacent stretches of ground without acting upon the pole (3).

2. Device according to claim 1, characterized in that the aforesaid means (10) are constituted by a fork (11) pivotally connected (12) onto the frame (2) of the machine, the pole (3) being pivotally connected (13) onto one of the ends of the fork and the prongs (14, 15) of the fork being adapted to both cooperate with a stop or the like (16) made fast to a bar (17) slidably mounted onto the said frame.

3. Device according to claim 1 or 2, characterized by at least one spring (19) connecting the pole (3) to the aforesaid stop (16).

4. Device according to one of claims 1 to 3, characterized in that the aforesaid bar (17) comprises two notches (20, 21) either one of which co-operates with an element (22) for the temporary locking of this bar.

5. Device according to claim 1, characterized in that the aforesaid means (10) are constituted by a sector (30) transversely mounted onto the pole (3) and upon which may ride a roller or the like (32) acted upon by a spring (33) connected to the frame (2) of the machine.

6. Device according to claim 5, characterized in that the aforesaid sector (30) comprises at each one of its ends a notch (30a, 30b) adapted to positively retain the roller (32) whereas the frame (2) of the machine comprises two stops or the like (34) either one of which co-operates with the roller (32) according to the direction of the pole (3).

7. Device according to claim 1, characterized in that the aforesaid means (10) are constituted by a link (40) pivotally connected (41) together with the pole (3) onto the frame (2, 51) of the machine and acted upon on the one hand by a first spring (55) connected to the frame (51) and on the other hand by a second spring (56) connected to the pole (3).

8. Device according to claim 7, characterized in that one of the ends of the link (40) comprises two ramps (40a, 40b) adapted to cooperate during the traction and the pivoting of the pole (3) with a stop or the like (57) made fast to the frame (51).

9. Method of automatically reversing the position of a pole (3) for the traction of an agricultural machine for treating the soils along adjacent stretches of ground (A, B, C) and of the type consisting in uncoupling the machine at the end of a first stretch (A) in order that after a turning round of the vehicle which pulls it, the latter may again couple itself onto the pole (3) of the machine for drawing it over a second adjacent stretch of ground (B), characterized in that :
- one draws with the vehicle (T) after its having turned round, the pole (3) located in a position transverse to the machine at the end of the first stretch of ground (A),
- one actuates during this traction which permits the rotation of the machine towards the second stretch of ground (B), means (10) automatically assuming a position different from that they had when the machine was on the first stretch of ground (A), and
- after the uncoupling of the vehicle at the end of the second stretch of ground (B), the aforesaid means (10) permit the pole (3) without any action thereupon to automatically assume a transverse position opposite to the foregoing, so that the said pole is located in the adequate position for being taken up again and pulled by the vehicle (T) after its having turned round over a third stretch of ground (C) adjacent to the second one (B) and so on.

10. Agricultural machine with one or several functions and comprising one frame (2) or several pivotally connected frames (2, 51), characterized in that it uses the device and/or the method according to any one of the foregoing claims.

## Patentansprüche

1. Vorrichtung zur selbsttätigen Umstellung der Stellung einer an eine landwirtschaftliche Maschine zur Bodenbearbeitung angekuppelten Deichsel, dadurch gekennzeichnet, daß zwischen der Maschine und der Deichsel (3) Mittel (10) vorgesehen sind, die die Deichsel (3), während ihrer Entkupplung am Ende eines Bodenstreifens (B), automatisch in eine Querstellung zurückstellt, die gegenüber der Querstellung, in welcher die Deichsel durch die besagten Mittel (10), während der Entkupplung am Ende des vorangehenden und angrenzenden Bodenstreifens (A) zurückgestellt wird, umgekehrt ist, wobei die besagten Mittel (10) durch den an der Deichsel (3) ausgeübten Zug, während der Wiederaufnahme der Deichsel durch das Schleppfahrzeug (T) auf dem folgenden und angrenzenden Streifen (C) betätigbar sind, um eine Stellung einzunehmen, die sich von derjenigen, die sie hatten, als die Maschine auf dem angrenzenden Streifen (B) war, unterscheidet, um, wegen ihrer unterchiedlichen Stellung, die Deichsel (3) zu ihrer umgekehrten Stellung hin zurückstellen zu können, um die Wiederaufnahme der Deichsel durch das Schleppfahrzeug (T) der Maschine am Ende der aufeinanderfolgenden angrenzenden Bodenstreifen ohne Einwirkung auf die Deichsel (3) zu gestatten.

2. Vorrichtung nach Anspruch 1, dadurch gekennzeichnet, daß die vorgenannten Mittel (10) durch eine an dem Rahmen (2) der Maschine angelenkten (12) Gabel (11) gebildet werden, wobei die Deichsel (3) an dem einen der Enden der Gabel angelenkt (13) ist und die Schenkel (14, 15) der Gabel beide fähig sind, mit einem an einer an dem besagten Rahmen gleitbar angeordneten Stange (17) fest verbundenen Anschlag oder dergleichen (16) zusammenzuwirken.

3. Vorrichtung nach Anspruch 1 oder 2, gekennzeichnet durch wenigstens eine die Deichsel (3) mit dem vorgenannten Anschlag (16) verbindende Feder (19).

4. Vorrichtung nach einem der Ansprüche 1 bis 3, dadurch gekennzeichnet, daß die vorgenannte Stange (17) zwei Kerben (20, 21) aufweist, wobei die eine oder die andere derselben mit einem Element (22) zur einstweiligen Verriegelung dieser Stange zusammenwirkt.

5. Vorrichtung nach Anspruch 1, dadurch gekennzeichnet, daß die vorgenannten Mittel (10) durch einen quer zu der Deichsel (3) angeordneten Sektor (30) gebildet werden, auf welchem eine durch eine mit dem Rahmen (2) der Maschine verbundene Feder (33) beaufschlagte Rolle oder dergleichen (32) rollen kann.

6. Vorrichtung nach Anspruch 5, dadurch gekennzeichnet, daß der vorgenannte Sektor (30) an jedem seiner Enden eine zum positiven Zurückhalten der Rolle (32) fähige Kerbe (30a, 30b) aufweist, während der Rahmen (2) der Maschine zwei Anschläge oder dergleichen (34) aufweist, wobei der eine oder der andere derselben mit der Rolle (32) gemäß der Ausrichtung der Deichsel (3) zusammenwirkt.

7. Vorrichtung nach Anspruch 1, dadurch gekennzeichnet, daß die vorgenannten Mittel (10) durch einen zusammen mit der Deichsel (3) an dem Rahmen (2, 51) der Maschine angelenkten (41) Lenker (40) gebildet werden, der einerseits durch eine mit dem Rahmen (51) verbundene erste Feder (55) und andererseits durch eine mit der Deichsel (3) verbundene zweite Feder (56) beaufschlagt wird.

8. Vorrichtung nach Anspruch 7, dadurch gekennzeichnet, daß das eine der Enden des Lenkers (40) zwei Rampen (40a, 40b) aufweist, die geeignet sind, während des Zuges und des Schwenkens der Deichsel (3), mit einem mit dem Rahmen (51) fest verbundenen Anschlag oder dergleichen (57) zusammenzuwirken.

9. Verfahren zur automatischen Umkehrung der Stellung einer Zugdeichsel (3) einer landwirtschaftlichen Maschine zur Bodenbearbeitung entlang angrenzenden Bodenstreifen (A, B, C) und derjenigen Gattung, die darin besteht, die Maschine am Ende eines ersten Streifens (A) abzuhängen, damit nach der Wendung des Fahrzeuges, das sie zieht, dieses letztere sich von neuem an der Deichsel (3) der Maschine anhängen kann, um sie über einen zweiten angrenzenden Bodenstreifen (B) zu schleppen, dadurch gekennzeichnet, daß :
- man mit dem Fahrzeug (T) nach seiner Wendung die sich in einer Querlage zur Maschine am Ende des ersten Bodenstreifens (A) befindende Deichsel zieht,
- man während dieses Zuges, die die Drehung der Maschine zu dem zweiten Bodenstreifen (B) hin gestattet, Mittel (10) betätigt, die automatisch eine andere Stellung, als diejenige, die sie hatten, wenn die Maschine auf dem ersten Bodenstreifen (A) war, einnehmen und
- nach Entkupplung des Fahrzeuges am Ende des zweiten Bodenstreifens (B), die vorgenannten Mittel (10) der Deichsel (3) gestatten, ohne irgendwelche Einwirkung, automatisch eine der vorangehenden Querstellung entgegengesetzte Querstellung einzunehmen, so daß die besagte Deichsel sich in der richtigen Stellung befindet, um durch das Fahrzeug (T) nach seiner Wendung wieder aufgenommen und über einen dritten an den zweiten Bodenstreifen (B) angrenzenden Bodenstreifen (C) gezogen zu werden und so weiter.

10. Einen Rahmen (2) oder mehrere angelenkte Rahmen (2, 51) aufweisende landwirtschaftliche Maschine mit einer oder mehreren Funktionen, dadurch gekennzeichnet, daß sie die Vorrichtung und/oder das Verfahren gemäß irgendeinem der vorangehenden Ansprüche verwendet.
